(19) Europäisches Patentamt

European Patent Office

Office européen des brevets

(11) **EP 1 340 366 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **01271090.1**

(22) Anmeldetag: **18.10.2001**

(51) Int Cl.$^{7}$: **H04N 1/405**

(86) Internationale Anmeldenummer:
**PCT/EP2001/012087**

(87) Internationale Veröffentlichungsnummer:
**WO 2002/051125 (27.06.2002 Gazette 2002/26)**

(54) **VERFAHREN ZUR HALBTONDARSTELLUNG EINES BILDES SOWIE BILDVERARBEITUNGSEINRICHTUNG UND DRUCKVORRICHTUNG ZUM AUSFÜHREN DIESES VERFAHRENS**

METHOD FOR REPRESENTING THE HALFTONE OF AN IMAGE AND IMAGE TREATMENT DEVICE AND PRINTING DEVICE FOR CARRYING OUT SAID METHOD

PROCEDE DE REPRESENTATION DE DEMI-TEINTES D'UNE IMAGE AINSI QUE DISPOSITIF DE TRAITEMENT D'IMAGES ET DISPOSITIF D'IMPRESSION SERVANT A METTRE EN OEUVRE LE PROCEDE

(84) Benannte Vertragsstaaten:
**DE FR GB**

(30) Priorität: **08.12.2000 DE 10061222**

(43) Veröffentlichungstag der Anmeldung:
**03.09.2003 Patentblatt 2003/36**

(73) Patentinhaber: **Océ Printing Systems GmbH 85586 Poing (DE)**

(72) Erfinder:
• **ENGBROCKS, Werner 85586 Poing (DE)**

• **HERMANN, Ulrich 79111 Freiburg (DE)**

(74) Vertreter:
**Schaumburg, Thoenes, Thurn, Landskron Patentanwälte Postfach 86 07 48 81634 München (DE)**

(56) Entgegenhaltungen:
EP-A- 0 602 854          WO-A-93/07709
US-A- 4 654 721          US-A- 5 243 443
US-A- 5 375 002          US-A- 5 835 687

EP 1 340 366 B1

**Beschreibung**

Die vorliegende Erfindung betrifft ein Verfahren zur Halbtondarstellung eines Bildes sowie eine Bildverarbeitungseinrichtung und eine Druckvorrichtung zum Ausführen dieses Verfahrens.

Verfahren zur Halbtondarstellung werden insbesondere zum Drucken von schwarz/weiß Bildern verwendet, um die einzelnen Graustufen in digitale Halbtonwerte für den Bilevel-Druck umzusetzen. Dies wird bei digitalen Druckern eingesetzt, die in der Regel nur zwei Farben wiedergeben: schwarz (Druckfarbe) oder weiß (vom Papier). Dieses Druckverfahren wird als Bilelevel-Druck bezeichnet. Mit dem Bilevel-Druck können keine Grauwerte (Halbtöne) erzeugt werden. Die Grautonwiedergabe wird deshalb durch eine Rasterung des Bildes simuliert. Wenn man einzelne Punkte mehr oder weniger regelmäßig auf weißem Papier druckt und diese aus einigem Abstand betrachtet, verschwimmen die Punkte zu einer grauen Fläche, weil das menschliche Auge diese Punkte nicht mehr auflösen kann. Um einen dunkleren Grauwert bzw. Tonwert vorzutäuschen, vergrößert man die Zahl der gedruckten Punkte, wobei der Anteil der weißen Fläche geringer wird. Beim Rastern lassen eine Vielzahl kleiner Punkte auf einer Fläche für den Betrachter einen Grauton entstehen.

In das Druckerbuch, Technik und Technologien der OPS-Hochleistungsdrucker, Drucktechnologien, Océ Printing Systems GmbH, ISBN 3-00-001019-X sind in Kapitel 6 Verfahren zum Erzeugen von Halbtonwerten beschrieben.

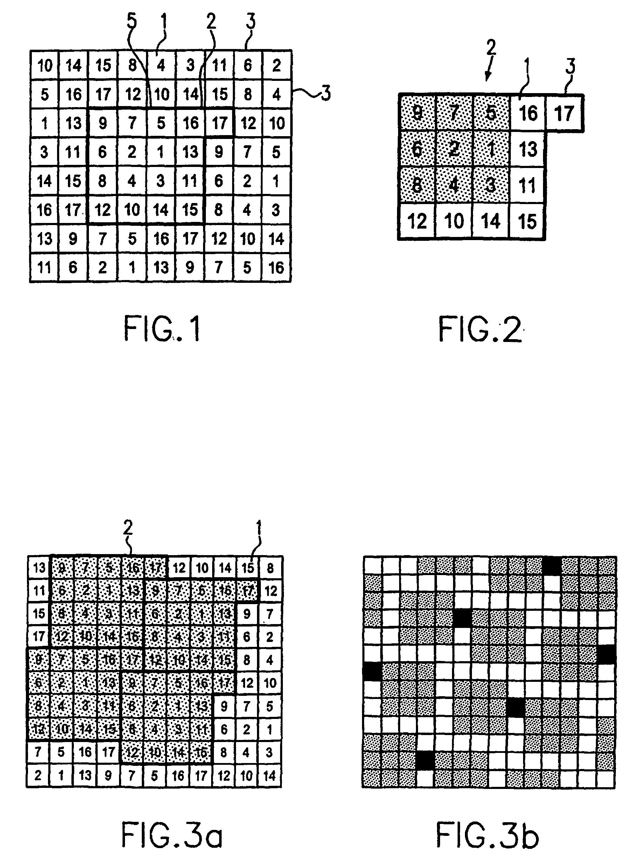

Fig. 1 zeigt eine in kleine Quadrate unterteilte Fläche, wobei jedes Quadrat einen Bildpunkt 1 darstellt. Die in den einzelnen Bildpunkten eingetragenen Zahlen entsprechen Schwellwerten eines unter dem Namen "clustered-dot ordered dither" bekannten Verfahrens zum Erzeugen von Halbtonwerten. Ein Bild, dessen Bildpunkte durch Farbwerte beschrieben werden, kann in Halbtonwerte umgesetzt werden, in dem jeder Farbwert eines Bildpunktes mit dem entsprechenden Schwellwert verglichen wird und falls der Farbwert größer oder gleich dem Schwellwert ist, wird der Halbtonwert gesetzt und falls der Farbwert kleiner als der Schwellwert ist, wird der Farbwert nicht gesetzt.

Die Schwellwerte der Bildpunkte sind zu Rasterzellen 2 zusammengefasst, die sich wiederholen, um so der vollständigen Fläche eines Bildes Schwellwerte zuordnen zu können. Die die Schwellwerte enthaltenden Rasterzellen stellen eine Dither-Matrix 5 dar, und das Verfahren zum Umsetzen eines durch Farbwerte dargestellten Bildes in Halbtonwerte wird in entsprechender Weise auch als Dither-Verfahren bezeichnet.

Sollen mit der in Fig. 1 gezeigten Dither-Matrix eine Fläche gleichmäßig mit 55,8 % grau dargestellt werden, so entspricht dies einem Grauwert von 9,5, da dem maximale Grauwert (volle Sättigung von schwarz) der maximale Schwellwert 17 und dem minimalen Grauwert (weiß) der Wert 0 zuzuordnen ist. Somit werden für eine Graustufen von 55,8 % alle Halbtonwerte der Bildpunkte, deren Schwellwerte kleiner als 9,5 ist, gesetzt und die übrigen Halbtonwerte werden nicht gesetzt. Fig. 2 zeigt eine Zelle, in der die Bildpunkte, deren Halbtonwert gesetzt sind, dunkel und die übrigen Bildpunkte hell dargestellt sind. Man kann erkennen, dass innerhalb einer Rasterzelle die Bildpunkte, deren Halbtonwerte gesetzt sind, nebeneinander liegen.

Da am Drucker nur die Bildpunkte gedruckt werden, deren Halbtonwerte gesetzt sind, hat dies zur Folge, dass innerhalb einer Rasterzelle lediglich ein einziger zusammenhängender Punkt gedruckt wird, der je nach Graustufe unterschiedlich groß ist. Dies ist für elektrographische Druckverfahren und viele weitere Druckverfahren, die kreisförmige Punkte drucken, vorteilhaft, da die Größe der zu druckenden einzelnen Bildpunkte nicht exakt der einem Bildpunkt zugeordneten Fläche entspricht, wodurch sich bei über die Rasterzelle verteilt angeordneten zu druckenden Bildpunkten sich eine starke Variation in der sich ergebenden Farbsättigung einstellen würde. Wenn die zu druckenden Bildpunkte einer Rasterzelle zueinander benachbart angeordnet sind, überlappen sich die einzelnen gedruckten Bildpunkte, die in der Regel größer sind als die ihnen exakt zugeordneten Flächen, einander und bilden eine durchgehende, geschlossene Fläche, deren gesamte Größe jedoch nur geringfügig von der Größe der Summe der den einzelnen Bildpunkten exakt zugeordneten Flächen abweicht.

Dieses Bündeln der Bildpunkte ist zudem vorteilhaft, da die Größe der einzelnen Bildpunkte von einigen Parametern, wie z.B., ob der nächste benachbarte Bildpunkt gesetzt ist, wieviel Toner angeboten wird, usw., abhängt. Der Einfluß dieser Variation der Größe einzelner Bildpunkte auf die Farbsättigung des Bildes wird durch die Bündelung mehrerer Bildpunkte zu einem großen zu druckenden Punkt vermindert.

Nachteilig an diesem bekannten Verfahren ist, dass mit einer Rasterzelle mit 17 Bildpunkten lediglich 18 Farbsättigungsstufen möglich sind. Beim Drucken eines sich allmählich verändernden Helligkeitsverlaufes werden diese einzelnen Farbstufen sichtbar und erzeugen Kanten im gedruckten Bild.

Grundsätzlich bestünde die Möglichkeit, die Rasterzellen zu vergrößern. Hierdurch könnte die Abstufung der einzelnen möglichen Graustufen erheblich verfeinert werden. Dies hat jedoch den Nachteil, dass die mit einer Rasterzelle gedruckten Punkte relativ grob strukturiert sind, so dass die Rasterstruktur erkennbar wird und das menschliche Auge die einzelnen Punkte nicht mehr als Grautöne wahrnimmt.

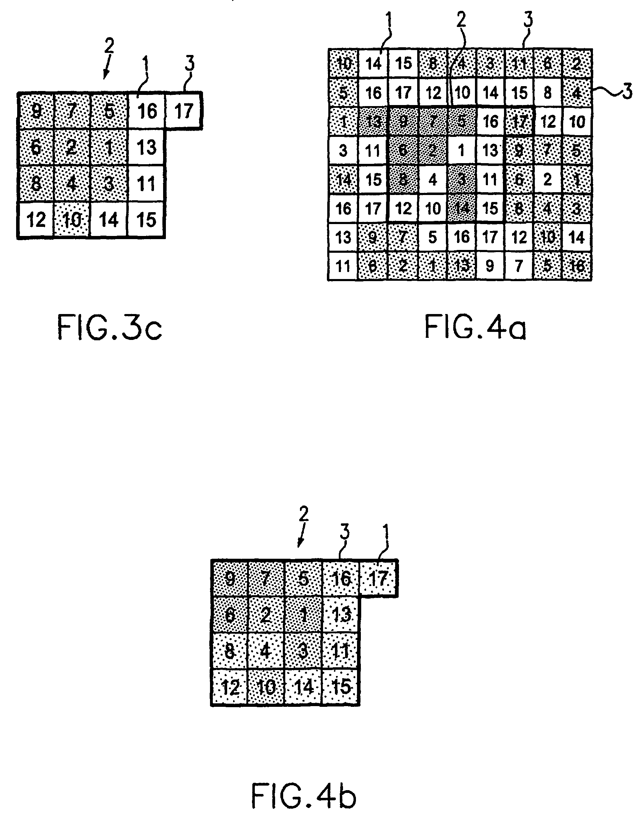

Zur Vermeidung dieser Nachteile wurde ein sogenanntes Superzellenverfahren entwickelt. Die dem Superzellenverfahren zugrunde liegende Rasterzelle ist in Fig. 3 gezeigt. Bei dem Superzellenverfahren werden mehrere Rasterzellen zu einer Superzelle zusammengefasst. Bei der in Fig. 3 gezeigten Ausführungsform sind es vier Rasterzellen. Die einzelnen Rasterzellen entsprechen der Rasterzelle aus Fig. 1.

Sollen Grauwerte gedruckt werden, deren Wert zwischen den Graustufen, die mit dem oben beschriebenen Verfahren gedruckt werden können, gedruckt werden, so wird in einer oder mehrerer der Rasterzellen der Superzelle ein Bildpunkt gesetzt, der über dem Grauwert liegt. Soll z.B. ein Grauwert von 55,8 % gedruckt werden, so wird in jeder zweiten Rasterzelle der Halbtonwert des Bildpunktes mit dem Schwellwert 10 gesetzt. Das sich hieraus ergebende Muster ist in Fig. 3b gezeigt. Fig. 3c zeigt eine einzelne Rasterzelle mit den den Bildpunkt zugeordneten Schwellwerten, wobei die Bildpunkte entsprechend ihrer Häufigkeit im Muster nach Fig. 3 dunkel belegt sind. Die Bildpunkte, deren Schwellwerte 1 bis 9 betragen, sind immer gesetzt, weshalb sie maximal dunkel dargestellt sind. Die Bildpunkte mit dem Schwellwert 10 werden nur jedes zweite mal gedruckt, weshalb er halbdunkel dargestellt ist und die übrigen Bildpunkte sind weiß, da deren Halbtonwerte nicht gesetzt und sie deshalb nicht gedruckt werden.

Die Anzahl der mit diesem Verfahren darstellbaren Graustufen ist erheblich größer als mit dem oben beschriebenen Verfahren. Die einzelnen Punkte fransen nicht aus, weshalb dieses Verfahren für ein elektrographisches Druckverfahren geeignet ist. Durch die Unterteilung der Superzelle in mehrere Einzelzellen, in denen jeweils ein zusammenhängender Punkt erzeugt wird, ist die Struktur so fein, dass sie vom menschlichen Auge nicht aufgelöst werden kann. Jedoch ist die Anzahl der Graustufen nach wie vor beschränkt, so dass bei einem allmählich sich verändernden Helligkeitsverlauf Strukturen im Bild entstehen, die durch entsprechende Kanten sichtbar werden.

Weiterhin ist das Errordiffusion-Verfahren bekannt, bei dem ein Bild mit beliebig vielen Graustufen zu rastern. Bei diesem Verfahren wird als Schwellwert ein konstanter Schwellwert verwendet, der etwa der halben Farbsättigung entspricht. Beim Bestimmen ob der Halbtonwert eines Bildpunktes gesetzt wird, wird der Farbwert mit dem Schwellwert verglichen und ist der Farbwert nicht kleiner als der Schwellwert, wird der entsprechende Bildpunkt gesetzt. Hierbei wird jedoch eine Differenz zwischen dem Farbwert des Ausgangsbildes und dem dem Halbtonwert entsprechenden Farbwert berechnet. Da die Halbtonwerte beim Bilevel-Druck nur der vollen Farbsättigung oder keiner Farbsättigung entsprechen, betragen die den Halbtonwerten entsprechenden Farbwerten entweder den der vollen Farbsättigung entsprechenden Betrag oder keiner Farbsättigung entsprechenden Betrag. Diese Differenz stellt ein Maß für eine Abweichung der Farbsättigung des Bildpunktes des Ausgangsbildes gegenüber dem durch den jeweiligen Halbtonwerten beschriebenen Bildpunkt dar. Mit dieser Differenz werden die Farbwerte der Bildpunkte des Ausgangsbildes korrigiert, die benachbart zum Bildpunkt angeordnet sind, dessen Halbtonwert bestimmt worden ist. Die Korrektur erfolgt durch Addieren der Differenz oder Teilen der Differenz zu einem oder mehreren Farbwerte. Dies hat zur Folge, dass wenn ein Halbtonwert eines Bildpunktes gesetzt wird, die Farbwerte der benachbarten Bildpunkte vermindert werden, wodurch die Wahrscheinlichkeit abnimmt, dass diese die Halbtonwerte dieser Bildpunkte gesetzt und damit diese Bildpunkte gedruckt werden. Wird der Halbtonwert eines Bildpunktes nicht gesetzt, so steigt die Wahrscheinlichkeit, dass die Halbtonwerte der benachbarten Bildpunkte nicht gesetzt und diese Bildpunkte nicht gedruckt werden. Hierdurch wird eine Rasterung des zu druckenden Bildes erzeugt.

Ein derartiges Errordiffusions-Verfahren ist aus der US 5,835,687 bekannt, bei dem die Verteilung des Fehlers auch auf Bildpunkte erfolgt, die nicht zu dem Bildpunkt benachbart sind, von dem der Fehler abgeleitet worden ist.

Aus der EP 0 545 734 B1 ist ein weiteres Verfahren zur Halbtondarstellung mittels Errordiffusions-Verfahren bekannt.

Mit dem Errordiffusions-Verfahren kann ein Bild mit Halbtonwerten in beliebigen Farbsättigungsstufen (Grauwerten bei Verwendung der Farbe schwarz) dargestellt werden. Mit diesem Kompensationsverfahren können somit Bilder in durch Halbtonwerte dargestellte Bilder umgesetzt werden. Dieses Verfahren hat sich deshalb sehr bei Anwendungen bewährt, bei welchem die einzelnen Bildpunkte mit ihrer exakten Größe darstellbar sind, wie z.B. bei Darstellungen auf einem Computerbildschirm. Bei diesem Errordiffusionsverfahren werden jedoch oftmals einzelne Bildpunkte gesetzt. Dies ist äußerst nachteilig für elektrographische Druckverfahren, da die Größe derart kleiner zu druckender Punkte nicht exakt kontrolliert werden kann, und es deshalb am ausgedruckten Bild zu erheblichen Abweichungen in Farbsättigung gegenüber der Vorlage kommen kann. Dieses Errordiffusionsverfahren kann deshalb in der oben beschriebenen Ausführungsform nicht bei Druckvorrichtungen eingesetzt werden, die nach dem elektrographische Druckverfahren arbeiten.

Aus der US 5,014,333 geht ein Bildprozessor hervor, der eine Vergleichseinrichtung aufweist, an der Grauwerte mit den Werten einer Dither-Matrix zur Erzeugung einer Halbtondarstellung verglichen werden. Bei diesem Vergleich wird gleichzeitig ein Fehlerwert ermittelt, der in einem Speicher abgespeichert wird. Mittels eines Filters wird anhand der im Speicher gespeicherten Fehlerwerte ein Korrekturwert gemäß dem Errordiffusions-Verfahren berechnet. Dieser Korrekturwert wird gemäß der mittleren Helligkeit eines Bereiches des zu druckenden Bildes, in dem der umzusetzende Bildpunkt liegt, gewichtet und zum Grauwert addiert, bevor dieser dem Vergleicher zugeführt wird. Der Vergleicher kann unterschiedliche Dither-Matrizen verwenden, die wiederum je nach Helligkeit des Bildbereiches ausgewählt werden. Dieser Bildprozessor ist technisch sehr aufwendig, da er viele unterschiedliche Elemente, wie Filter, Vergleicher, Konverter und dgl. enthält.

In der US 5,031,050 ist ein für elektrographisch arbeitende Druckvorrichtungen geeignetes Verfahren beschrieben, das das Errordiffusions-Verfahren mit dem eingangs beschriebenen Rasterverfahren kombiniert. Bei diesem Verfahren wird ein Fehler aus allen Differenzen zwischen den Farbwerten des Ausgangsbildes und den gedruckten Farbwerten der Bildpunkte einer Rasterzelle berechnet. Die einzelnen Differenzen werden zu einem Zellenfehler aufsummiert. Dieser Zellenfehler wird durch die Anzahl der Bildpunkte einer Rasterzelle geteilt und zu allen Schwellwerten der nächsten Rasterzelle addiert, die anschließend zum Setzen der Halbtonwerte der nächsten Bildpunkte verwendet werden.

Bei diesem Verfahren wird somit der Fehler bezüglich der Farbsättigung innerhalb einer Rasterzelle beim Umsetzen in Halbtonwerte ermittelt und dieser Fehler auf eine benachbarte Rasterzelle übertragen, wobei deren Schwellwerte entsprechend korrigiert werden. Dieses Verfahren erlaubt das Drucken von beliebigen Graustufen und ist für elektrographische Druckvorrichtungen geeignet, da die innerhalb einer Rasterzelle zu druckende Punktform beibehalten wird. Dieses Verfahren ist jedoch aufwendig in der Berechnung der einzelnen Rasterzellen, da zunächst die Summe aller Differenzen einer Rasterzelle ermittelt werden muss, hieraus dann der Differenzbetrag zu berechnen ist, mit diesem alle Schwellwerte einer weiteren Rasterzelle zu korrigieren sind, bevor das eigentliche Dither-Verfahren, mit dem die Halbtonwerte gesetzt werden, durchgeführt werden kann. Ein solches Verfahren ist zudem aufwendig zu programmieren, da es hierbei im Gegensatz zu den eingangs erwähnten Verfahren nicht möglich ist, alle Bildpunkte immer mit der gleichen Routine aufeinanderfolgend abzuarbeiten, sondern die Abarbeitung kann jeweils nur innerhalb einer Rasterzelle erfolgen, dann ist die benachbarte Rasterzelle zu korrigieren, bevor erneut die Halbtonwerte dieser einen Rasterzelle bestimmt werden können. Ein durchgehend schritthaltendes Verfahren, bei dem eine einzige Routine aufeinanderfolgend auf die einzelenen Bildpunkte angewendet wird ist somit nicht möglich.

Der Erfindung liegt die Aufgabe zugrunde, ein Verfahren zur Halbtondarstellung eines Bildes zu schaffen, mit dem beliebige Farbsättigungen erzeugt werden können und das für elektrographisch arbeitende Druckvorrichtungen geeignet ist und dennoch einfach strukturiert und mit geringem Rechenaufwand ausführbar ist.

Die Aufgabe wird durch ein Verfahren mit den Merkmalen des Anspruchs 1 gelöst. Vorteilhafte Ausgestaltungen der Erfindung sind in den Unteransprüchen angegeben.

Das erfindungsgemäße Verfahren zur Halbtondarstellung ist eine Kombination des oben erwähnten Rasterverfahrens mitels Dithermatrix und dem Errordiffusions-Verfahren und zeichnet sich dadurch aus, dass der sich beim Setzen eines Halbtonwertes eines bestimmten Bildpunktes ergebende Differenzwert zum Korrigieren eines Farbwertes von zumindest einem weiteren Bildpunkt verwendet wird, der nicht zu dem bestimmten Bildpunkt benachbart angeordnet ist.

Es ist überraschend, dass durch das Korrigieren von Farbwerten von Bildpunkten, wobei zumindest einer dieser Bildpunkte nicht benachbart zu dem Bildpunkt ist, von dem der Fehler abgeleitet worden ist, dazu führt, dass die durch die Verwendung von Dither-Matrizen erzielte Bündelung von Bildpunkten beibehalten wird, wodurch sich das erfindungsgemäße Verfahren besonders gut für den elektrofotografischen Druck eignet.

Da beim erfindungsgemäßen Verfahren der Differenzwert direkt auf Farbwerte weitere Bildpunkte verteilen wird, ist das erfindungsgemäße Verfahren wesentlich einfacher ausführbar und vorrichtungstechnisch realisierbar, als dies beispielsweise bei der Vorrichtung nach der US 5,014,333 der Fall ist.

Das erfindungsgemäße Verfahren kann schritthaltend ausgeführt werden, das heißt, dass bei jedem Setzen eines Halbtonwertes eines bestimmten Bildpunktes unmittelbar danach die entsprechenden Bildpunkte mit Hilfe des sich hierbei ergebenden Differenzwertes korrigiert werden. Hierdurch ist es nicht notwendig, die Dither-Matrix zu korrigieren.

Durch die Korrektur von Farbwerten, deren Bildpunkte ein Stück beabstandet von dem Bildpunkt sind, dessen Halbtonwert gesetzt wird, wird die Korrektur auf einen vom zu setzenden Bildpunkt entfernten Bereich verschoben. Dies hat zur Folge, dass beim Drucken eines Bildes, das derart durch Halbtonwerte dargestellt wird, die einzelnen zu druckenden Bildpunkte in der Regel aus mehreren zusammenhängenden einzelnen Bildpunkten bestehen, die mit einem elektrographischen Druckverfahren wesentlich präziser gedruckt werden können als Punkte, die lediglich aus einem oder zwei bzw. drei Bildpunkten bestehen.

Mit der Erfindung wird somit ein schritthaltendes Verfahren zur Halbtondarstellung eines Bildes geschaffen, das für den Einsatz in elektrographische arbeitenden Druckvorrichtung geeignet ist.

Bei dem erfindungsmäßigen Verfahren können insbesondere beim Bestimmen eines Halbtonwertes zumindest sechs Farbwerte des Ausgangsbildes durch Addieren eines Differenzteilwertes korrigiert werden. Weiterhin können insbesondere Farbwerte (FA) der Bildpunkte (1) mit den Koordinaten $(X+1, Y)$, $(X+2, Y)$, $(X-2, Y+1)$, $(X-1, Y+1)$, $(X, Y+1)$, $(X+1, Y+1)$, $(X+2, Y+1)$, $(X-2, Y+2)$, $(X-1, Y+2)$, $(X, Y+2)$, $(X+1, Y+2)$, $(X+2, Y+2)$ korrigiert werden, sofern diese Bildpunkte (1) vorhanden sind. Weiterhin können Farbwerte der Bildpunkte der Spalte $X+3$ und/oder $Y+3$ korrigiert werden, sofern diese vorhanden sind.

Nachfolgend wird die Erfindung näher anhand eines in den Zeichnungen dargestellten Ausführungsbeispieles erläutert. In den Zeichnungen zeigen:

Fig. 1     die Unterteilung eines Bildes in Bildpunkte und Rasterzellen mit den entsprechenden Schwellwerten,

Fig. 2     eine Rasterzelle mit den Schwellwerten, in welchen die Häufigkeiten der gesetzten Halbtonwerte durch eine bestimmte Graustufe dargestellt sind,

Fig. 3a   die Unterteilung eines Bildes in eine sogenannte Superzelle,

Fig. 3b   das sich bei Verwendung der Superzelle aus Fig. 3a ergebende Druckmuster zum Drucken einer vorbestimmten Graustufe,

Fig. 3c   eine Ratsterzelle der Superzelle, in der die Häufigkeiten, mit welchen die Halbtonwerte der einzelnen Bildpunkte gesetzt sind, durch entsprechende Graustufen dargestellt sind,

Fig. 4a   ein Druckmuster, dass sich beim Drucken einer bestimmten Graustufe mittels einer einfachen Kombination des Errordiffusions-Verfahrens mit einem Dither-Verfahren ergibt,

Fig. 4b   eine Rasterzelle, in der die Häufigkeiten der zu druckenden Bildpunkte durch entsprechende Graustufen des Druckmusters aus Fig. 4a dargestellt sind,

Fig. 5   ein Druckraster und die den einzelnen Zellenelementen zugeordneten Druckpunkte,

Fig. 6   ein Raster, in dem die Aufteilung eines Differenzwertes auf einzelne Farbwerte weiterer Bildpunkte dargestellt ist,

Fig. 7a   ein Muster, das sich beim Drucken mit dem Verfahren nach Fig. 6 beim Drucken einer vorbestimmten Graustufe ergibt, und

Fig. 7b   eine Rasterzelle, in der die Häufigkeit der einzelnen Bildpunkte des Druckmusters aus Fig. 7a durch eine entsprechende Graustufe dargestellt ist,

Fig. 8   schematisch eine Druckvorrichtung zum Ausführen des erfindungsgemäßen Verfahrens.

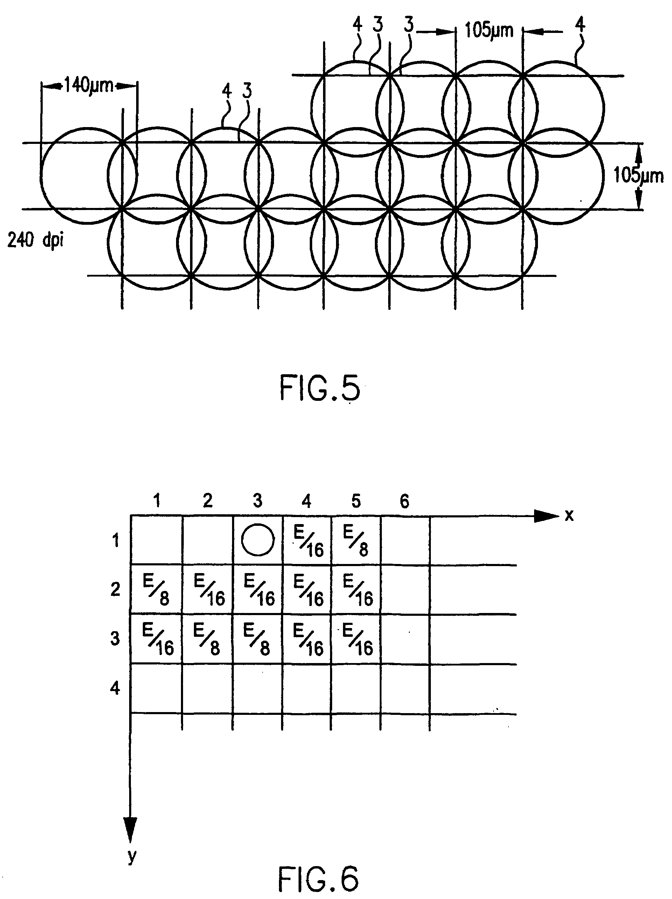

Das erfindungsgemäße Verfahren beruht sowohl auf dem bekannten Dither-Verfahren und dem bekannten Errordiffusions-Verfahren. Ein Halbtonwert wird gesetzt, wenn ein einen Bildpunkt beschreibender Farbwert nicht kleiner als der dem Bildpunkt zugeordnete Schwellwert ist. Ist ein Bildpunkt gesetzt, so wird an dem Ort des Bildpunktes Farbe gedruckt. Ist der Bildpunkt nicht gesetzt, so wird an dem Ort des Bildpunktes keine Farbe gedruckt. Die Schwellwerte sind durch eine Dither-Matrix vorgegeben. Durch die an sich bekannte Ausgestaltung der Dither-Matrix wird eine Rasterung im gedruckten Bild erzeugt, die vom menschlichen Auge nicht aufgelöst werden kann und sich für einen menschlichen Betrachter als bestimmte Farbsättigung darstellt. Bei einem Schwarz/Weiß-Bild entspricht die Farbsättigung der Graustufe.
Wie es eingangs bereits erläutert worden ist, besteht bei dem herkömmlichen Errordiffusionsverfahren das Problem, dass beim Drucken die Farbsättigung des gedruckten Bildes oftmals nicht der Vorlage entspricht, da beim Errordiffusionsverfahren Druckpunkte gebildet werden, die aus wenigen (einem, zwei oder drei) Bildpunkten bestehen. In Fig. 5 ist die Rasterung für einen Drucker mit einer Auflösung von 240 dpi gezeigt. Die einzelnen Zellenelemente 3 sind Quadrate mit einer Kantenlänge von 105 μm. Die von einem Drucker zu druckenden Druckpunkte 4 sind kreisförmig und sie werden so eingestellt, dass jeweils ein Druckpunkt 4 ein Zellenelement 3 vollständig abdecken kann. Dies bedeutete, dass die Druckpunkte 4 an den Rändern der Zellenelemente 3 jeweils vorstehen und eine größere Fläche als die Zellenelemente 3 besitzen. Werden die Druckpunkte beispielsweise schachbrettartig im Raster verteilt gedruckt, so erstreckt sich jeder Druckpunkt 4 an allen vier Seiten des Zellenelementes 3 in ein benachbartes weißes Zellenelement. Obwohl bei einer derartigen Verteilung nur lediglich die Hälfte aller möglichen Druckpunkte gedruckt werden, ist die Farbsättigung wesentlich höher als 50 %, da nicht nur die zu bedeckenden Zellenelemente 3 mit Farbe bedeckt sind sondern auch Teile der Zellenelemente 3 mit Farbe bedeckt sind, die frei bleiben sollen.
Werden die zu druckenden Druckpunkte in benachbarte Zellenelemente 3 gebündelt, so erstrecken sich die vorstehenden Bereiche der Druckpunkte 4 meistens in Zellenelemente 3, die auch bedruckt sind. Hierdurch werden weniger Flächen mit Druckfarbe bedeckt, die an sich nicht mit Druckfarbe zu bedecken sind. Dies führt dazu, dass das Verhältnis zwischen mit Farbe bedeckter Fläche und nicht mit Farbe bedeckter Fläche genauer der vorgegebenen Farbsättigung entspricht.
Zudem besteht bei elektrographischen Druckverfahren der Nachteil, dass einzelne zu druckende Bildpunkte oftmals unterschiedlich groß gedruckt werden. Der Einfluß dieser Variation der Größe der einzelnen zu druckenden Bildpunkte auf die farbsättigung des gedruckten Bildes kann durch die Bündelung der Bildpunkte vermindert werden.
Es ist deshalb zweckmäßig, bei Druckverfahren, die im wesentlichen kreisförmige Punkte drucken und bei welchen ein Halbton- bzw. Rasterverfahren eingesetzt wird, mehrere Druckpunkte 4 aneinanderliegend angrenzend zu bündeln und zu vermeiden, dass viele einzelne oder lediglich paarweise aneinander grenzende Druckpunkte 4 gedruckt werden.

Derartige Druckverfahren sind insbesondere elektrographische Druckverfahren, wie z.B. elektrophotostatische und elektroionographische Druckverfahren. Dieses Problem kann jedoch auch beim Offset-Druckverfahren und bei anderen Druckverfahren auftreten.

Bei dem erfindungsgemäßen Verfahren zur Halbtondarstellung eines Bildes wird beim Setzen eines Halbtonwertes ein Differenzwert zwischen einem dem Bildpunkt zugeordneten Farbwert und dem dem Halbtonwert entsprechenden Farbwert berechnet. Ist der Farbwert kleiner als der Schwellwert, so wird der entsprechende Halbtonwert nicht gesetzt und als Differenzwert wird die Differenz des Farbwertes des Bildpunktes und des Farbwertes des gedruckten Bildpunktes (=weiß) berechnet. Der Farbwert von der Farbe "weiß" ist bei Verwendung eines weißen Druckmediums gleich null, weshalb die Differenz der Farbwert ist. Ist der Farbwert größer als der Schwellwert wird der entsprechende Halbtonwert gesetzt und der als Differenzwert wird die Differenz des Farbwertes des Bildpunktes und des Farbwertes des gedruckten Bildpunktes (=maximale Farbsättigung) berechnet. Diese Differenz ist negativ. Durch die Addition der Differenz zu einem oder mehreren weiteren Farbwerten erhöht oder vermindert man die Wahrscheinlichkeit, dass die zu diesen Farbwerten korrespondierenden Bildpunkte gedruckt werden.

Würde man lediglich die zu dem Bildpunkt, dessen Halbtonert bestimmt wird, die Farbwerte der benachbarten Bilpunkte korrigieren, wie es vom Errordiffusions-Verfahren bekannt ist, so würde sich das in Fig 4a gezeigte Druckmuster ergeben. Beim Drucken dieses Druckmusters wurde die in Fig 1 gezeigte Rasterzelle bzw. Dither-Matrix verwendet.

Das in Fig. 4a gezeigte Druckmuster ist stark ausgefranst und weist viele Kanten zwischen bedruckten und unbedrucktenb Flächen auf. Ein solches Druckmuster ist für den elektrographischen Druck von Nachteil.

Erfindungsgemäß wird der Differenzwert in mehrere Differenzteilwerte aufgeteilt und Farbwerte weiterer Bildpunkte, von welchen zumindest ein Bildpunkt nicht zu dem Bildpunkt, dessen Halbtonwert bestimmt wird, benachbart angeordnet ist, durch Addieren eines der Differenzteilwerte zu dem jeweiligen Farbwert korrigiert. Selbstverständlich können im Rahmen der Erfindung auch Farbwerte von Bildpunkten, die zu dem Bildpunkt, dessen Halbtonwert bestimmt wird, benachbart angeordnet sind, korrigiert werden. Wesentlich für die Erfindung ist jedoch, dass sich die Korrektur der Farbwerte auch auf Farbwerte von Bildpunkten erstreckt, die nicht zu dem Bildpunkt, dessen Halbtonwert bestimmt wird, benachbart sind.

Ein konkretes Ausführungsbeispiel einer derartigen Korrektur der Farbwerte ist in Fig. 6 gezeigt. Fig. 6 zeigt ein Raster von Bildpunkten, wobei jedes Zellenelement ein Quadrat ist. Jedem Zellenelement sind Koordinaten X, Y zugeordnet, wobei das Zellenelement in der oberen linken Ecke die Koordinaten (1, 1) besitzt. Das Zellenelement bzw. der Bildpunkt (3, 1) ist mit einem Kreis gekennzeichnet, was bedeutet, dass von diesem Bildpunkt der Halbtonwert bestimmt wird. Beim Bilevel-Druck ist der Halbtonwert ein digitaler Wert, der beispielsweise die Werte 1 oder 0 annehmen kann. Wird der Halbtonwert auf 1 gesetzt, so bedeutet dies, dass der entsprechende Bildpunkt beim Drucken mit Farbe in voller Sättigung bedruckt wird. Wird der Halbtonwert auf 0 gesetzt, wird der entsprechende Bildpunkt nicht mit Farbe bedruckt. Bei Verwendung der in in Fig. 1 gezeigten Rasterzelle mit einer 17 Elemente enthaltenden Dither-Matrix betragen die den Halbtonwerten 1, 0 entsprechende Farbwerte 18 für volle Sättigung und 0 für keine Sättigung.

Beim Bestimmen des Halbtonwertes wird ein Differenzwert E zwischen dem dem Bildpunkt zugeordneten Farbwert FA des Ausgangsbildes und dem dem Halbtonwert HW bzw. dem Farbwert FD des gedruckten Bildes zugeordneten Farbwerts berechnet. Der Farbwert beschreibt die Farbsättigung des Bildpunktes. Sind die Werte der Halbtonwerte 1 für gesetzten Halbtonwert und 0 für nicht gesetzten Halbtonwert, so kann dieser Zusammenhang für die in Fig. 1 gezeigte Rasterzelle in folgender Formel dargestellt werden:

$$E = FA - FD = FA - HW * 18$$

Der Differenzwert E wird in Differenzteilwerte aufgeteilt. Im vorliegenden Ausführungsbeispiel werden als Differenzteilwerte die Werte E/8 und E/16 verwendet. Sie betragen jeweils 1/8 bzw. 1/16 des gesamten Differenzwerts. Die Farbwerte des Ausgangsbildes der Bildpunkte (5, 1), (1, 2), (3, 2) und (3, 3) werden jeweils durch Addieren des Differenzteilwertes E/8 korrigiert. Die Farbwerte des Ausgangsbildes der Bildpunkte (4, 1), (2, 2), (3, 2), (4, 2), (5, 2), (1, 3), (4, 3) und (5, 3) werden jeweils durch Addieren des Differenzteilwertes E/16 korrigiert. Es werden somit vier Farbwerte mit dem Differenzteilwert E/8 und acht Farbwerte mit dem Differenzteilwert E/16 korrigiert. Das bedeutet, dass die Summe aller Differenzteilwerte den Differenzwert E ergibt. Somit wird der Differenzwert E vollständig auf mehrere Farbwerte verteilt.

Die Halbtonwerte werden beginnend mit dem Bildpunkt (1, 1) der linken oberen Ecke in jeder Zeile von links nach rechts und zeilenweise von oben nach unten bestimmt. Beim Bestimmen des Halbtonwertes für einen jeden Bildpunkt werden die Farbwerte des Ausgangsbildes der in der gleichen Zeile folgenden Bildpunkte und jeweils fünf Farbwerte in den beiden darunter liegenden Zeilen korrigiert. In Koordinatenschreibweise bedeutet dies, dass beim Bestimmen des Halbtonwertes des Bildpunktes (X, Y) die Farbwerte der Bildpunkte mit den Koordinaten (X+1, Y), (X+2, Y), (X-2, Y+1), (X-1, Y+1), (X, Y+1), (X+1, Y+1), (X+2, Y+1), (X-2, Y+2), (X-1, Y+2), (X, Y+2), (X+1, Y+2), (X+2, Y+2) korrigiert werden, sofern diese Bildpunkte vorhanden sind. Sind z.B. die Halbtonwerte von Bildpunkten am linken, rechten oder unterem Rand zu bestimmen, so würden ein Teil der weiteren Bildpunkte, deren Farbwerte zu korrigieren sind, außerhalb des Randes des Rasters liegen und sind deshalb nicht vorhanden.

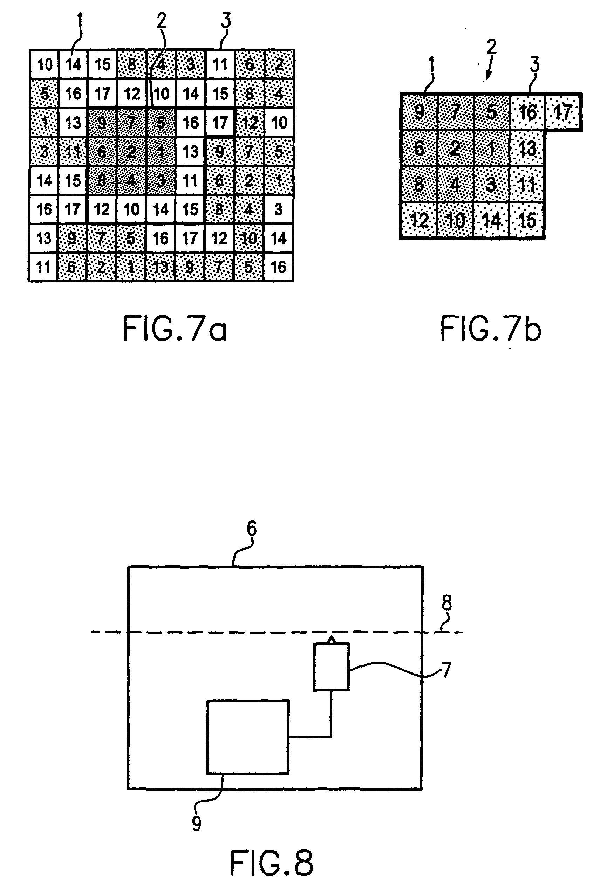

Bei dem in Fig. 6 gezeigten Verfahren zum Bestimmen von Halbtonwerten wird die in Fig. 1 gezeigte Dither-Matrix verwendet. Hierbei hat sich bei der Darstellung einer Farbsättigung von 55,8 %, was einem Farbwert von 9,5 entspricht, das in Fig. 7a gezeigte Muster ergeben. Es hat sich überraschenderweise gezeigt, dass keine einzelnen oder paarweisen frei stehenden Bildpunkte gedruckt werden, sondern alle gedruckten Bildpunkte eine zusammenhängende Fläche bilden. Im Vergleich mit dem Muster aus Fig. 4a gibt es in Fig. 7a wesentlich weniger Grenzkanten zwischen bedruckten und nicht bedruckten Bereichen. Das Muster in Fig. 7a ist wesentlich weniger ausgefranst als das in Fig. 4a. Dies führt zu einer wesentlich präziseren Einstellung der durch das Vorlagenbild vorgegebenen Farbsättigung oder der Graustufe, wenn es sich um ein Schwarz/Weiß-Bild handelt.

Fig. 7b zeigt die Häufigkeit der mit dem erfindungsgemäßen Verfahren gedruckten Bildpunkte bei einer Farbsättigung von 55,8 % anhand der Helligkeit der einzelnen Zellenelemente 3 der Rasterzelle 2. Die dunklen Zellenelemente 3 mit den Schwellwerten 9, 7, 5, 6, 2, 1, 8, 4 sind am häufigsten gedruckt worden. Sie sind angrenzend aneinander liegend angeordnet. Am zweithäufigsten sind die Zellenelemente 3 mit den Schwellwerten drei und zehn gedruckt worden. Die übrigen Zellenelemente wurden weniger häufig gedruckt. Vergleicht man das Bild aus Fig. 7b mit dem Bild aus Fig. 4b, so sieht man, dass die häufig gedruckten Zellenelemente gebündelt angeordnet sind. Dies zeigt die Wirkung des erfindungsgemäßen Verfahrens, dass sehr kompakte Punkte im gedruckten Bild erzeugt.

Erfindungsgemäß wird dies durch eine schritthaltende Korrektur erreicht, die bei jeder Bestimmung eines Halbtonwertes eines Zellenelementes erzielt wird.

Das Verfahren beruht auf der in Fig. 1 gezeigten Rasterzelle. In der Drucktechnologie sind unterschiedlichste Arten von Rasterzellen gebräuchlich. Bei einer anderen Rasterzelle kann es selbstverständlich zweckmäßig sein, den Differenzwert auf andere Art und Weise auf die Farbwerte weiterer Bildpunkte zu verteilen. Unabhängig von der Ausbildung der Rasterzelle liegt das Wesen der Erfindung darin, nicht nur Farbwerte von benachbarten Bildpunkten des Bildpunktes, von dem der Halbtonwert bestimmt wird, zu korrigieren, sondern auch weiter entfernte Farbwerte zu korrigieren. Hierdurch wird vermieden, dass sich die Differenzteilwerte aufeinander folgender Korrekturschritte derart schnell aufsummieren, dass die gedruckten Punkte stark ausfransen. Mit dem erfindungsgemäßen Verfahren wird somit die Fehlerkorrektur auf benachbarte Rastrzellen verlagert, wodurch die Ausfransung der zu druckenden Punkte vermieden wird.

Es ist deshalb vorteilhaft, wenn der Differenzwert in mehrere Differenzteilwerte unterteilt wird, die vorzugsweise auf 5 oder mehr, insbesondere 12 bis 21 Farbwerte verteilt werden.

Hierdurch kann die durch die Wahl der Rasterzelle vorgegebene Form der zu druckenden Punkte im wesentlichen beibehalten werden.

Da bei Bündelung der Bildpunkte die einzelnen Druckpunkte sich in Bereiche nicht zu bedruckender Bildpunkte erstrecken, besteht eine, wenn auch geringe Ungenauigkeit bezüglich der Farbsättigung. Diese kann ausgeglichen werden, indem beim Setzen der Halbtonwerte berücksichtigt wird, ob bereits die Halbtonwerte von einem oder zwei unmittelbar benachbarten Bildpunkten gesetzt sind. Sind z.B. bereits die Halbtonwerte eines oder zweier benachbarter Bildpunkte gesetzt, so bedeutet dies, dass diese beiden benachbarten Bildpunkte bedruckt werden. Wird der Bildpunkt, dessen Fehler E zu bestimmen ist, nicht gedruckt, so ist dessen Randbereich jedoch durch die benachbarten, überlappenden Bildpunkte etwas bedruckt. Dies hat zur Folge, dass, obwohl der Halbtonwert gleich 0 ist, diesem Bildpunkt ein von 0 verschiedener Farbwert zuzuordnen ist. Bei Verwendung der in Fig. 1 gezeigten Rasterzelle hat sich gezeigt, dass bei einem gesetzten Halbtonwert eines unmittelbar benachbarten Bildpunktes bei der Berechnung des Fehlers E für den Farbwert FD des gedruckten Bildpunktes der Wert 2 und bei zwei gesetzten Halbtonwerten benachbarter Bildpunkte der Wert 3 zu setzen ist.

Sind die benachbarten Bildpunkte nicht bedruckt und soll der Bildpunkt, dessen Halbtonwert zu bestimmen ist, bedruckt werden, so erstreckt sich dieser gedruckte Punkt in die Bereiche der benachbarten Bildpunkte, wodurch die Farbsättigung größer als bei bedruckten benachbarten Bildpunkten ist. Bei Verwendung der in Fig. 1 gezeigten Rasterzelle hat sich gezeigt, dass bei einem nicht gesetzten Halbtonwert eines unmittelbar benachbarten Bildpunktes bei der Berechnung des Fehlers E für den Farbwert FD des gedruckten Bildpunktes der Wert 20 und bei zwei nicht gesetzten Halbtonwerten benachbarter Bildpunkte der Wert 22 zu setzen ist. Die Farbwerte FD der gedruckten Bildpunkte können somit gemäß folgender Tabelle korrigiert werden:

| Anzahl bedruckter benachbarter Bildpunkte | 0 | 1 | 2 |
|---|---|---|---|
| FD für HW = 0 | 0 | 2 | 3 |

(fortgesetzt)

| Anzahl bedruckter benachbarter Bildpunkte | 0 | 1 | 2 |
|---|---|---|---|
| FD für HW = 1 | 22 | 20 | 18 |

Fig. 8 zeigt eine Druckvorrichtung 6 zum Ausführen des erfindungsgemäßen Verfahrens. Diese Druckvorrichtung 6 weist eine elektrographisch arbeitende Druckeinheit 7, insbesondere elektrophotographisch oder elektroionographisch arbeitende Druckeinheit auf, mit welcher etwa kreisförmige Druckpunkte in einem Raster auf eine Papierbahn 8 gedruckt werden. Die Druckvorrichtung 6 ist mit einer Steuereinrichtung 9 versehen, die die Farbwerte eines Bildes in Halbtonwerte umsetzt und die die Druckeinheit 7 zum Drucken der zu druckenden Bildpunkte entsprechend den Halbtonwerten ansteuert. Besitzt ein Halbtonwert den Wert 1, so wird der entsprechende Bildpunkt gedruckt, besitzt ein Halbtonwert den Wert 0, so wird der entsprechende Bildpunkt nicht gedruckt. Das Umsetzen des mit Farbwerten beschriebenen Bildes in Halbtonwerte erfolgt gemäß dem oben angegebenen Ausführungsbeispiel.

Die Erfindung kann in elektronischen Einrichtungen wie Bildverarbeitungsschaltungsanordungen, Computern und Druckvorrichtungen eingesetzt werden. Sie kann dabei insbesondere mit Hardware-Bausteinen und/oder Software-Komponenten ausgeführt werden. Auch Computerprogrammprodukte wie z.B. Disketten CD-ROMs oder andere Speicherelemente, auf denen Computerprogramme gespeichert sind, die beim Ausführen auf einem Computer das erfindungsgemäße Verfahren bewirken, werden von der erfindungsgemäßen Lehre erfasst.

Die Erfindung ist oben anhand eines Ausführungsbeispiels zum Bilevel-Druck beschrieben worden. Im Rahmen der Erfindung ist es selbstverständlich auch möglich, die Halbtonwerte eines Multilevel-Drucks zu bestimmen. Hierbei sind lediglich für den Multilevel-Druck geeignete Dither-Matrizen zu verwenden und den Farbwerten (FD) des gedruckten Bildpunktes die den unterschiedlichen Stufen des Multilevel-Drucks entsprechenden Farbsättigungswerte zuzuordnen.

Die Erfindung kann auch für einen Mehrfarbendruck verwendet werden, wobei die Farben separat in ihre Halbtonwerte umgesetzt werden.

Die Erfindung kann folgendermaßen kurz zusammengefasst werden:

Die Erfindung betrifft ein Verfahren zur Halbtondarstellung eines Bildes und beruht auf einer Kombination eines Rasterverfahrens mit Dither-Matrix und einem Errordiffusions-Verfahrens. Erfindungsgemäß werden beim Bestimmen eines Halbtonwertes eines Bildpunktes Farbwerte von Bildpunkten korrigiert, die nicht zu dem Bildpunkt, dessen Halbtonwert bestimmt wird, benachbart angeordnet sind. Insbesondere werden mehrere Farbwerte korrigiert.

Mit dem erfindungsgemäßen Verfahren wird der beim Bestimmen eines Halbtonwertes bestehende Fehler auf einen größeren Bereich verteilt, wodurch die durch die Dither-Matrix vorgegebene Punktform im wesentlichen beibehalten wird.

Bezugszeichenliste

1    Bildpunkt
2    Rasterzelle
3    Zellenelement
4    Druckpunkt
5    Dither-Matrix
6    Druckvorrichtung
7    Druckeinheit
8    Papierbahn
9    Steuereinrichtung

**Patentansprüche**

**1.** Verfahren zur Halbtondarstellung eines Bildes, bei dem Bildpunkte (1) eines Ausgangsbildes durch je einen Farbwert dargestellt sind, wobei der Farbwert die Farbsättigung des jeweiligen Bildpunktes (1) beschreibt, und eine Dither-Matrix (5) verwendet wird, die Schwellwerte enthält, wobei jedem Bildpunkt (1) ein Schwellwert der Dithermatrix (5) zugeordnet wird und falls der Farbwert des jeweiligen Bildpunktes (1) größer oder gleich dem Schwellwert ist, wird ein Halbtonwert gesetzt und falls der Farbwert kleiner als der Schwellwert ist, wird der Halbtonwert nicht gesetzt, wobei beim Setzen eines Haltonwertes eines bestimmten Bildpunktes (1) folgende Schritte ausgeführt werden:

- Berechnen eines Differenzwertes (E) zwischen dem Farbwert (FA) des Bildpunktes des Ausgangsbildes und dem Farbwert (FD) dieses Bildpunktes (1) des zu druckenden Bildes,
- Aufteilen des Differenzwertes (E) in mehrere Differenzteilwerte (E/8, E/16),
- Korrigieren von Farbwerten weiterer Bildpunkte (1) des Ausgangsbildes durch Addieren jeweils eines Differenzteilwertes (E/8, E/16) zu einem der zu korrigierenden Farbwerte, wobei zumindest einer dieser weiteren Bildpunkte (1) nicht benachbart zu dem einen bestimmten Bildpunkt (1) ist, dessen Halbtonwert bestimmt wird, und
- Verwenden der korrigierten Farbwerte beim Bestimmen des jeweiligen Halbtonwertes der weiteren Bildpunkte (1).

2. Verfahren nach Anspruch 1,
   **dadurch gekennzeichnet,**
   **dass** beim Bestimmen eines Halbtonwertes zumindest sechs Farbwerte des Ausgangsbildes durch Addieren eines Differenzteilwertes korrigiert werden.

3. Verfahren nach Anspruch 1 oder 2,
   **dadurch gekennzeichnet,**
   **dass** die Bildpunkte (1) eines Bildes in Reihen und Spalten angeordnet sind, wobei die Halbtonwerte der Bildpunkte (1) in den Reihen aufeinanderfolgend von links nach rechts gesetzt werden und die Reihen von oben nach unten abgearbeitet werden, wobei beim Bestimmen des Halbtonwertes eines bestimmten Bildpunktes diesem Bildpunkt die Koordinaten X, Y zugeordnet werden, wobei X die Spalte des Bildpunktes (1) und Y die Reihe des Bildpunktes (1) beschreibt und X+1 die Spalte rechts und Y+1 die Reihe unterhalb des bestimmten Bildpunktes (1) beschreibt, und Farbwerte (FA) von Bildpunkten (1) der Spalten X+1, X+2 und/oder der Reihen Y+1, Y+2 korrigiert werden, sofern diese Bildpunkte vorhanden sind.

4. Verfahren nach Anspruch 3,
   **dadurch gekennzeichnet,**
   **dass** Farbwerte (FA) der Bildpunkte (1) der Spalte X+3 und/oder Y+3 korrigiert werden, sofern diese vorhanden sind.

5. Verfahren nach Anspruch 3 oder 4,
   **dadurch gekennzeichnet,**
   **dass** Farbwerte (FA) der Bildpunkte (1) mit den Koordinaten (X+1, Y), (X+2, Y), (X-2, Y+1), (X-1, Y+1), (X, Y+1), (X+1, Y+1), (X+2, Y+1), (X-2, Y+2), (X-1, Y+2), (X, Y+2), (X+1, Y+2), (X+2, Y+2) korrigiert werden, sofern diese Bildpunkte (1) vorhanden sind.

6. Verfahren nach Anspruch 5,
   **dadurch gekennzeichnet,**
   **dass** zu den Farbwerten (FA) der Bildpunkte (X, Y+2), (X-1, Y+2), (X-2, Y+1) und (X+2, Y) jeweils ein Differenzteilwert addiert wird, der 1/8 des Differenzwertes beträgt und zu den übrigen zu korrigierenden Schwellwerten jeweils ein Differenzteilwert addiert wird, der 1/16 des Differenzwertes beträgt.

7. Verfahren nach einem der Ansprüche 1 bis 6,
   **dadurch gekennzeichnet,**
   **dass** folgende Dithermatrix verwendet wird

| 9 | 7 | 5 | 16 | 17 |
|---|---|---|----|----|
| 6 | 2 | 1 | 13 | |
| 8 | 4 | 3 | 11 | |
| 12 | 10 | 14 | 15. | |

8. Verfahren nach einem der Ansprüche 1 bis 7,

**EP 1 340 366 B1**

**dadurch gekennzeichnet,**
**dass** die Farbwerte die Farbsättigung einer einzigen Farbe beschreiben.

**9.** Verfahren nach Anspruch 8,
**dadurch gekennzeichnet,**
**dass** die Farbwerte die Farbsättigung der Farbe schwarz beschreiben.

**10.** Verfahren nach einem dwer Ansprüche 1 bis 9,
**dadurch gekennzeichnet,**
**dass** beim Berechnen des Differenzwertes (E) die Farbwerte (FD) des zu druckenden Bildpunktes in Abhängigkeit davon korrigiert werden, ob unmittelbar benachbarte Bildpunkte des Bildpunktes, dessen Halbtonwert bestimmt wird, bedruckt sind.

**11.** Verfahren nach einem der Ansprüche 1 bis 10,
**dadurch gekennzeichnet,**
**dass** die Halbtonwerte zum Ansteuern einer Druckvorrichtung verwendet werden, wobei an jedem Bildpunkt, dem ein gesetzter Halbtonwert zugeordnet ist, ein Farbpunkt auf ein Substrat gedruckt wird, und an jedem Bildpunkt, dem ein nicht gesetzter Halbtonwert zugeordnet ist, kein Farbpunkt gedruckt wird.

**12.** Verfahren nach Anspruch 11,
**dadurch gekennzeichnet,**
**dass** ein elektrographisches Druckverfahren verwendet wird.

**13.** Bildverarbeitungseinrichtung mit einer Steuereinrichtung (9), die zum Ausführen des Verfahren nach einem der Ansprüche 1 bis 12 ausgebildet ist.

**14.** Druckvorrichtung zum Ausführen des Verfahren nach einem der Ansprüche 1 bis 12, mit einer elektrographisch arbeitenden Druckeinheit (7), einer Steuereinrichtung (9), die die Farbwerte eines Bildes in Halbtonwerte umsetzt, und die die Druckeinheit (7) zum Drucken der zu druckenden Bildpunkte entsprechend den Halbtonwerten ansteuert, wobei die Steuereinrichtung (9) zum Durchführen des Verfahrens nach einem der Ansprüche 1 bis 10 ausgebildet ist.

**Claims**

**1.** A method for the halftone presentation of an image, in which picture elements (1) of an initial image are represented by a respective colour value, the colour value describing the colour saturation of the respective picture element (1), and a dither matrix (5) which contains threshold values is used, a threshold value of the dither matrix (5) being allocated to each picture element (1), and when the colour value of the respective picture element (1) is higher than or equal to the threshold value, a halftone value is set, and when the colour value is lower than the threshold value the halftone value is not set, the following steps being carried out upon setting of a halftone value of a specific picture element (1):

- calculating a difference value (E) between the colour value (FA) of the picture element of the initial image and the colour value (FD) of this picture element (1) in the image to be printed,
- dividing the difference value (E) into a plurality of difference sub-values (E/8, E/16),
- correcting colour values of further picture elements (1) of the initial image by adding a respective difference sub-value (E/8, E/16) to one of the colour values to be corrected, at least one of the further picture elements (1) not being adjacent to the specific picture element (1) whose halftone value is determined, and
- employing the corrected colour values in the determination of the respective halftone value of the further picture elements (1).

**2.** The method according to claim 1,
**characterized in that**
at least six colour values of the initial image are corrected in the determination of a halftone value by adding a difference sub-value.

**3.** The method according to claim 1 or 2,

**10**

**characterized in that**
the picture elements (1) of an image are arranged in rows and columns, the halftone values of the picture elements (1) in the rows being successively set from left to right and the rows being processed from top to bottom, wherein, when determining the halftone value of a specific picture element, the coordinates X, Y are allocated to this specific picture element, wherein X describes the column of the picture element (1) and Y describes the row of the picture element (1), X+1 describes the column to a right of and Y+1 describes the row below the specific picture element, and colour values (FA) of picture elements (1) of the columns X+1, X+2 and/or the rows Y+1, Y+2 are corrected, insofar as these picture elements are present.

4. The method according to claim 3,
**characterized in that**
colour values (FA) of the picture elements (1) of the column X+3 and/or Y+3 are corrected, insofar as they are present.

5. The method according to claim 3 or 4,
**characterized in that**
colour values (FA) of the picture elements (1) with the coordinates (X+1, Y), (X+2, Y), (X-2, Y+1), (X-1, Y+1), (X, Y+1), (X+1, Y+1), (X+2, Y+1), (X-2, Y+2), (X-1, Y+2), (X, Y+2), (X+1, Y+2), (X+2, Y+2) are corrected insofar as these picture elements (1) are present.

6. The method according to claim 5,
**characterized in that**
a respective difference sub-value that amounts to 1/8 of the difference value is added to the colour values (FA) of the picture elements (X, Y+2), (X-1, Y+2), (X-2, Y+1) and (X+2, Y), and a respective difference sub-value that amounts to 1/16 of the difference value is added to the other threshold values to be corrected.

7. The method according to one of the claims 1 to 6,
**characterized in that**
the following dither matrix is employed:

| 9 | 7 | 5 | 16 | 17 |
|----|----|----|-----|----|
| 6 | 2 | 1 | 13 | |
| 8 | 4 | 3 | 11 | |
| 12 | 10 | 14 | 15. | |

8. The method according to one of the claims 1 to 7,
**characterized in that** the colour values describe the colour saturation of a single colour.

9. The method according to claim 8,
**characterized in that** the colour values describe the colour saturation of the colour black.

10. The method according to one of the claims 1 to 9,
**characterized in that**
when calculating the difference value (E), the colour values (FD) of the picture element to be printed are corrected dependent on whether immediately neighbouring picture elements of the picture element whose halftone value is determined are printed.

11. The method according to one of the claims 1 to 10,
**characterized in that**
the halftone values are employed for driving a printer device, a colour point being printed on a substrate at every picture element to which a set halftone value is allocated, and no colour point being printed at each picture element to which a non-set halftone value is allocated.

12. The method according to claim 11,
**characterized in that**
an electrographic printing method is employed.

**13.** An image processing device, comprising a control device (9) which is designed for implementing the method according to one of the claims 1 to 12.

**14.** A printing device for implementing the method according to one of the claims 1 to 12, comprising
an electrographically working printing unit (7),
a control device (9) that converts the colour values of an image into halftone values and that drives the printing unit (7) to print the picture elements to be printed corresponding to the halftone values, the control device (9) being designed for implementing the method according to one of the claims 1 to 10.

**Revendications**

**1.** Procédé de représentation de demi-teintes d'une image, dans lequel :

chaque point d'image (1) d'une image de sortie est représentée par une valeur de couleur qui décrit la saturation de couleur du point d'image correspondant (1), et
on utilise une matrice Dither (5) qui contient des valeurs de seuil à chacune desquelles est associé un point d'image (1),
une valeur de demi-teinte étant établie dans le cas où la valeur de couleur du point d'image correspondant (1) est supérieure ou égale à la valeur de seuil, et la valeur de demi-teinte n'étant pas établie dans le cas où la valeur de couleur est inférieure à la valeur de seuil,
dans le cas où l'on utilise une valeur de demi-teinte d'un point d'image déterminé (1), les étapes suivantes étant mises en oeuvre qui consistent à :

- calculer une valeur de différence (E) entre la valeur de couleur (FA) du point d'image de l'image de sortie et la valeur de couleur (FD) de ce point d'image (1) de l'image à imprimer,
- diviser la valeur de différence (E) en plusieurs valeurs de différence partielles (E/8, E/16),
- corriger les valeurs de couleur d'autres points d'image (1) de l'image de sortie en ajoutant à chaque fois une valeur de différence partielle (E/8, E/16) à l'une des valeurs de couleur à corriger, au moins l'un de ces autres points d'image (1) n'étant pas voisin de l'un des points d'image déterminés (1) dont la valeur de demi teinte est déterminée, et
- utiliser les valeurs de couleur corrigées lors de la détermination de la valeur de demi-teinte correspondante des autres points d'image (1).

**2.** Procédé selon la revendication 1, **caractérisé en ce que**, lors de la détermination d'une valeur de demi-teinte, au moins six valeurs de couleur de l'image de sortie sont corrigées en ajoutant une valeur de différence partielle.

**3.** Procédé selon la revendication 1 ou 2, **caractérisé en ce que** les points d'image (1) d'une image sont agencées en lignes et en colonnes, les valeurs de demi-teinte des points d'image (1) étant placées successivement de gauche à droite dans les lignes, et les lignes étant traitées de haut en bas,
lors de la détermination de la valeur de demi-teinte d'un point d'image déterminé, les coordonnées X, Y étant associées à ce point d'image, X décrivant la colonne du point d'images (1) et Y décrivant la ligne du point d'image (1), et X+1 décrivant la colonne de droite et Y+1 décrivant la ligne au-dessous du point d'image déterminé (1), et les valeurs de couleur (FA) des points d'image (1) des colonnes X+1, X+2 et/ou des lignes Y+1, Y+2 sont corrigées dans la mesure où ces points d'image existent.

**4.** Procédé selon la revendication 3, **caractérisé en ce que** des valeurs de couleur (FA) des points d'image (1) de la colonne X+3 sont corrigées dans la mesure où ces points d'image existent.

**5.** Procédé selon la revendication 3 ou 4,' **caractérisé en ce que** des valeurs de couleur (FA) des points d'image (1) de coordonnées (X+1, Y), (X+2, Y), (X-2, Y+1), (X-1, Y+1), (X, Y+1), (X+1, Y+1), (X+2, Y+1), (X-2, Y+2), (X-1, Y+2), (X, Y+2), (X+1, Y+2), (X+2, Y+2) sont corrigées dans la mesure où ces points d'image (1) existent.

**6.** Procédé selon la revendication 5, **caractérisé en ce que** l'on ajoute à chaque valeur de couleur (FA) des points d'image de coordonnées (X, Y+2), (X-1, Y+2), (X-2, Y+1) et (X+2, Y) une valeur de différence, partielle qui est égale à 1/8 de la valeur de différence et l'on ajoute chacune des autres valeurs de seuil à corriger une valeur de différence partielle qui est égale à 1/16 de la valeur de différence.

**7.** Procédé selon l'une des revendications 1 à 6, **caractérisé en ce que** l'on utilise la matrice suivante :

| 9 | 7 | 5 | 16 | 17 |
|---|---|---|----|----|
| 6 | 2 | 1 | 13 | |
| 8 | 4 | 3 | 11 | |
| 12 | 10 | 14 | 15 | |

**8.** Procédé selon l'une des revendications 1 à 7, **caractérisé en ce que** les valeurs de couleur décrivent la saturation d'une couleur individuelle.

**9.** Procédé selon la revendication 8, **caractérisé en ce que** les valeurs de couleur décrivent la saturation de la couleur noire.

**10.** Procédé selon l'une des revendications 1 à 9, **caractérisé en ce que**, lors du calcul de la valeur de différence (E), les valeurs de couleur (FD) des points d'image à imprimer sont corrigées selon que l'on imprime ou non des points d'image immédiatement adjacents du point d'image dont la valeur de demi-teinte est déterminée.

**11.** Procédé selon l'une des revendications 1 à 10, **caractérisé en ce que** l'on utilise les valeurs de demi-teinte pour commander un dispositif d'impression,
un point de couleur étant imprimé sur un substrat en chaque point d'image auquel est associée une valeur de demi-teinte établie, et aucun point de couleur n'est imprimé en chaque point d'image auquel est associée une valeur de demi-teinte non établie.

**12.** Procédé selon la revendication 11, **caractérisé en ce que** l'on utilise un procédé d'impression électrographique.

**13.** Dispositif de traitement d'image comportant un dispositif de commande (9) qui est conformé pour mettre en oeuvre le procédé selon l'une des revendications 1 à 12.

**14.** Dispositif d'impression destiné à mettre en oeuvre le procédé selon l'une des revendications 1 à 12, lequel dispositif d'impression comprend une unité d'impression (7) à fonctionnement électrographique, un dispositif de commande (9) qui convertit les valeurs de couleur d'une image en valeurs de demi-teinte, et qui commande l'unité d'impression (7) en vue d'imprimer les points d'image à imprimer en fonction des valeurs de demi-teinte, ledit dispositif de commande (9) étant conformé pour mettre en oeuvre le procédé selon l'une des revendications 1 à 10.

FIG.1

FIG.2

FIG.3a

FIG.3b

FIG.3c

FIG.4a

FIG.4b

FIG.5

FIG.6

FIG.7a

FIG.7b

FIG.8